# EUROPEAN PATENT SPECIFICATION

(11) **EP 3 142 500 B1**
(45) Date of publication and mention of the grant of the patent: **12.02.2020**
(21) Application number: 15792704.7
(22) Date of filing: 13.05.2015
(51) Int. Cl.: A23L 27/30, A23L 2/39, A23L 2/60

(54) **HIGHLY SOLUBLE STEVIOL GLYCOSIDES**
HOCHLÖSLICHE STEVIOLGLYCOSIDE
GLYCOSIDES DE STÉVIOL HAUTEMENT SOLUBLES

(30) Priority: 13.05.2014 US 201461992540 P
(43) Date of publication of application: 22.03.2017
(73) Proprietor: Cargill, Incorporated, Wayzata, MN 55391 (US)
(72) Inventor: CARLSON, Ting Liu, Marietta, South Carolina 29661 (US); GOULSON, Melanie Jean, Dayton, Minnesota 55327 (US); KNUTSON, Nathan Edward, Maple Grove, Minnesota 55311 (US)
(74) Representative: Gowshall, Jonathan Vallance
(86) International application number: PCT/US2015/030538
(87) International publication number: WO 2015/175644

(56) References cited:
- WO-A1-2013/176738
- WO-A1-2014/107642
- WO-A2-2013/102793
- US-A1- 2011 183 056
- US-A1- 2011 189 360
- US-A1- 2012 189 739
- US-A1- 2013 059 030
- MASAYA OHTA: "Characterization of Novel Steviol Glycosides from Leaves of Stevia rebaudiana Morita", J. APPL. GLYCOSCI., vol. 57, 17 August 2010 (2010-08-17), pages 199-209, XP055121080, DOI: 10.5458/jag.57.199

## Description

### CROSS-REFERENCE TO RELATED APPLICATIONS

### FIELD OF THE INVENTION

The present invention relates to compositions comprising soluble steviol glycosides. More specifically, the present invention relates to liquid compositions including the highly soluble minor steviol glycoside rebaudioside O.

### BACKGROUND OF THE INVENTION

Sugar alternatives are highly sought after for use in various food and beverage products. Steviol glycosides are sweet-tasting compounds extracted from the stevia plant (Stevia rebaudiana Bertoni). Known sweet glycosides that may be extracted from Stevia include, for example, the six rebaudiosides, Rebaudioside A to F, stevioside, and dulcoside A. In particular, significant commercial interest has been focused on obtaining and purifying Rebaudioside A from Stevia. Other minor steviol glycosides that have also been isolated from Stevia having pleasant-tasting sweet characteristics include, but are not limited to, rebaudioside O. Masaya, J.Appl. Glycosci., vol 57, p199-209, 2010 discloses an aqueous extraction of Stevia rebaudiana Morita. US 2011/189360 discloses a method of preparing a liquid beverage concentrate composition comprising Rebaudioside D. WO 2013/176738 discloses methods of preparing highly purified steviol glycosides.

The structures and characteristics of various minor steviol glycosides, including Rebaudioside O, are reported by Morita et al. in US Pub No 2011/0183056 and by Chaturvedula et al. in Biomolecules, 2013, 3, 733-740.

### SUMMARY OF THE INVENTION

The invention is defined by the claims.

The present invention is directed to, in part, liquid compositions that comprise one or more soluble steviol glycosides.

A liquid composition comprises one or more steviol glycosides, wherein the concentration of the one or more steviol glycosides in the composition comprises at least 5 wt% of the composition, and wherein the one or more steviol glycosides comprise 10-95 wt% Rebaudioside O, and the liquid composition is an aqueous composition.

In embodiments, the concentration of the one or more steviol glycosides comprises 5-10 wt% of the composition.

The one or more steviol glycosides comprises 10-95 wt% Rebaudioside O, preferably, the one or more steviol glycosides comprises 10-55 wt% Rebaudioside O, or the one or more steviol glycosides comprises 15-35 wt% Rebaudioside O.

In other embodiments, the liquid composition comprises a beverage, a carbonated beverage, a concentrate, a beverage concentrate, or a portable liquid concentrate table top application.

Other embodiments of the invention include a method of making a liquid composition comprising the steps of providing one or more steviol glycosides wherein the one or more steviol glycosides comprise 10 to 95 wt% Rebaudioside O, and contacting the one of more steviol glycosides with a sufficient amount of a liquid comprising water to provide the liquid composition. The concentration of the one or more steviol glycosides in the composition comprises at least 5 wt% of the composition.

The one or more steviol glycosides comprises 10-95 wt% Rebaudioside O, preferably the one or more steviol glycosides comprises 15-55 wt% Rebaudioside O, or the one or more steviol glycosides comprises 10-35 wt% Rebaudioside O.

In still other embodiments, the method may be used to provide a beverage, a carbonated beverage, a concentrate, a beverage concentrate, a throw syrup, or a portable liquid concentrate tabletop application.

### DETAILED DESCRIPTION

The purpose of the embodiments chosen and described is to provide an appreciation and understanding by those skilled in the art of the principles and practices of the present invention.

The present invention is directed to, in part, liquid compositions that comprise one or more soluble steviol glycosides, wherein the one or more soluble steviol glycosides comprise Rebaudioside O. As seen in the example, Rebaudioside O (≥95% purity) has a measured instantaneous solubility in ultrapure water at ambient temperature of >50 g/L at both pH 7 and pH 3 (citrate buffer).

The one or more steviol glycosides comprise Rebaudioside O. Other steviol glycosides may also be present such as, but not limited to, Rebaudioside A, Rebaudioside B, Rebaudioside C, Rebaudioside D, Rebaudioside F, steviol bioside, steviol monoside, stevioside, dulcoside A, rubososide, other minor steviol glycosides, or combinations thereof. In another embodiment, the one or more steviol glycoside is a combination of Rebaudioside A and Rebaudioside O.

According to the invention, a liquid composition comprises one or more steviol glycosides, wherein the concentration of the one or more steviol glycosides in the composition comprises at least 5 wt% of the composition, and wherein the one or more steviol glycosides comprise Rebaudioside O.

In other embodiments, the concentration of the one or more steviol glycosides comprises 5-30 wt% of the composition, the concentration of the one or more steviol glycosides comprises 5-25 wt% of the composition, the concentration of the one or more steviol glycosides comprises 5-20 wt% of the composition, the concentration of the one or more steviol glycosides comprises 5-15 wt% of the composition, the concentration of the one or more steviol glycosides comprises 5-10 wt% of the composition, the concentration of the one or more steviol glycosides comprises 5-8 wt% of the composition, or the concentration of the one or more steviol glycosides comprises 5-6 wt% of the composition.

The one or more steviol glycosides comprises 10-95 wt% Rebaudioside O, the one or more steviol glycosides comprises 10-55 wt% Rebaudioside O, the one or more steviol glycosides comprises 15-50 wt% Rebaudioside O, or the one or more steviol glycosides comprises 15-35 wt% Rebaudioside O.

In yet other embodiments, the one or more steviol glycosides comprises at least 10 wt% Rebaudioside O, at least 20 wt% Rebaudioside O, at least 40 wt% Rebaudioside O, at least 70 wt% Rebaudioside O, at least 90 wt% Rebaudioside O, or at least 95 wt% Rebaudioside O.

In some embodiments, the pH of the liquid composition is less than 8. In other embodiments, the pH of the liquid composition is less than 7. In yet other embodiments, the pH of the liquid composition is less than 6. In yet other embodiments, the pH of the liquid composition is less than 5. In yet other embodiments, the pH of the liquid composition is less than 4. In yet other embodiments, the pH of the liquid composition ranges from 2 to 5. In yet other embodiments, the pH of the liquid composition ranges from 2 to 4.

In other embodiments, the liquid composition comprises a beverage, a carbonated beverage, a concentrate, a beverage concentrate, or a portable liquid concentrate table top application. Examples of beverages include carbonated soft drinks, ready to drink teas, sports drinks, dairy drinks, yogurt-containing drinks, alcoholic beverages, energy drinks, flavored waters, vitamin drinks, fruit drinks, and fruit juices.

In embodiments where the liquid composition is a beverage, a carbonated beverage or a beverage concentrate, the liquid composition may also include additional ingredients, such as flavorants, preservatives, emulsifiers, colorants, nutritive sweeteners, high intensity sweeteners, vitamins, mineral salts, and clouding agents. In an embodiment, the flavorant is selected from the group consisting of lemon, lime, orange, grape, lemon-lime, cola, root beer, peach, kiwi, and mixtures thereof.

The liquid compositions of the present invention may also include other ingredients. In some embodiments, the liquid compositions can further include another high intensity sweetener, a flavoring, an antioxidant, caffeine, a nutritive sweetener, salts, protein, or a sweetness enhancer. Other optional additives that may be used in the present liquid composition include preservatives, other solvents such as glycerol and ethanol, or other polyols such as erythritol, sorbitol, or maltitol.

Optionally, the liquid composition contains one or more additional steviol glycosides. Examples of steviol glycosides include rebaudioside A, rebaudioside C, rebaudioside D, rebaudioside E, rebaudioside F, stevioside, rubusoside, steviolbioside, and dulcoside A, other steviol glycosides, and mixtures thereof. These additional steviol glycosides are optionally each present at a concentration of from about 10 to about 8000 ppm.

The method of the invention of making a liquid composition comprising the steps of providing one or more steviol glycosides wherein the one or more steviol glycosides comprises 10 to 95 wt% Rebaudioside O, and contacting the one of more steviol glycosides with a sufficient amount of a liquid comprising water to provide the liquid composition as an aqueous composition. The term aqueous as used herein means that the liquid composition contains water. The liquid composition may be greater than 50% water, 75% water, or 90% water.

The concentration of the one or more steviol glycosides in the composition comprises at least 5 wt% of the composition.

In other embodiments of the method, the concentration of the one or more steviol glycosides comprises 5-30 wt% of the composition, the concentration of the one or more steviol glycosides comprises 5-25 wt% of the composition, the concentration of the one or more steviol glycosides comprises 5-20 wt% of the composition, the concentration of the one or more steviol glycosides comprises 5-15 wt% of the composition, the concentration of the one or more steviol glycosides comprises 5-10 wt% of the composition, the concentration of the one or more steviol glycosides comprises 5-8 wt% of the composition, the concentration of the one or more steviol glycosides comprises 5-6 wt% of the composition.

The one or more steviol glycosides comprises the one or more steviol glycosides comprises 10-95 wt% Rebaudioside O, the one or more steviol glycosides comprises 10-55 wt% Rebaudioside O, the one or more steviol glycosides comprises 15-50 wt% Rebaudioside O, or the one or more steviol glycosides comprises 15-35 wt% Rebaudioside O.

In yet other embodiments of the method, the one or more steviol glycosides comprises at least 10 wt% Rebaudioside O, at least 20 wt% Rebaudioside O, at least 40 wt% Rebaudioside O, at least 70 wt% Rebaudioside O, at least 90 wt% Rebaudioside O, or at least 95 wt% Rebaudioside O.

In yet other embodiments of the method, the pH of the liquid composition is less than 8. In other embodiments, the pH of the liquid composition is less than 7. In yet other embodiments, the pH of the liquid composition is less than 6. In yet other embodiments, the pH of the liquid composition is less than 5. In yet other embodiments, the pH of the liquid composition is less than 4. In yet other embodiments, the pH of the liquid composition ranges from 2 to 5. In yet other embodiments, the pH of the liquid composition ranges from 2 to 4.

In still other embodiments, the method may be used to provide a beverage, a carbonated beverage, a concentrate, a beverage concentrate, a throw syrup, or a portable liquid concentrate tabletop application.

As used herein, the terms "about" or "approximately" mean within an acceptable range for the particular parameter specified as determined by one of ordinary skill in the art, which will depend in part on how the value is measured or determined, e.g., the limitations of the sample preparation and measurement system. Examples of such limitations include preparing the sample in a wet versus a dry environment, different instruments, variations in sample height, and differing requirements in signal-to-noise ratios. For example, "about" can mean greater or lesser than the value or range of values stated by 1/10 of the stated values, but is not intended to limit any value or range of values to only this broader definition. For instance, a concentration value of about 30% means a concentration between 27% and 33%. Each value or range of values preceded by the term "about" is also intended to encompass the embodiment of the stated absolute value or range of values.

Throughout this specification and claims, unless the context requires otherwise, the word "comprise", and variations such as "comprises" and "comprising", will be understood to imply the inclusion of a stated integer or step or group of integers or steps but not the exclusion of any other integer or step or group of integer or step. When used herein "consisting of' excludes any element, step, or ingredient not specified in the claim element. When used herein, "consisting essentially of' does not exclude materials or steps that do not materially affect the basic and novel characteristics of the claim. In the present disclosure of various embodiments, any of the terms "comprising", "consisting essentially of' and "consisting of' used in the description of an embodiment may be replaced with either of the other two terms.

. Unless otherwise indicated, all parts and percentages are by weight and all molecular weights are weight average molecular weights. The foregoing detailed description has been given for clarity of understanding only.

### EXAMPLE

Two solutions were prepared: one at pH 7 in ultrapure water and the other at pH 3 (0.01 M citric acid). A purified sample of rebaudioside O (≥95% purity) was added incrementally to reach a saturation concentration. Based on limited quantity of rebaudioside O, and observed high solubility, the solubility was determined to be greater than 50 g/L.

**Solubility of Rebaudioside O in acidic and neutral solution**

| pH of solution | Rebaudioside O solubility (g/L) |
|---|---|
| pH 3 | >50 |
| pH 7 | >50 |

## Claims

1. A liquid composition comprising one or more steviol glycosides, wherein:
a. the concentration of the one or more steviol glycosides in the composition comprises at least 5 wt% of the composition,
b. the one or more steviol glycosides comprise 10 to 95 wt% Rebaudioside O; and
c. the liquid composition is an aqueous composition.

2. The composition of claim 1, wherein the concentration of the one or more steviol glycosides in the composition comprises at least 5-10 wt% of the composition.

3. The composition of claim 1, wherein the concentration of the one or more steviol glycosides comprises 5-6 wt% of the composition.

4. The composition of claim 1, wherein the one or more steviol glycosides comprises 15-50 wt% Rebaudioside O.

5. The composition of claim 1, wherein the pH of the composition is less than 5.

6. The composition of claim 1, wherein the pH of the composition ranges from 2 to 5.

7. The composition of claim 1, wherein the composition comprises a concentrate.

8. The composition of claim 1, wherein the composition comprises a throw syrup.

9. A method of making a liquid concentrate comprising the steps of providing one or more steviol glycosides wherein the one or more steviol glycosides comprise 10-95 wt% Rebaudioside O, and contacting the one of more steviol glycosides with a sufficient amount of a liquid comprising water to provide the liquid concentrate, wherein the concentration of the one or more steviol glycosides is at least 5 wt% of the composition.

10. The method of claim 9, wherein the one or more steviol glycosides comprises 15-50 wt% Rebaudioside O.

11. The method of claim 9, wherein the concentrate comprises a beverage concentrate.

12. The method of claim 9, wherein the concentrate comprises a throw syrup.

## Patentansprüche

1. Flüssigzusammensetzung, die ein oder mehrere Steviolglycoside umfasst, wobei:
a) die Konzentration des einen oder der mehreren Steviolglycoside in der Zusammensetzung mindestens 5 Gewichtsprozent der Zusammensetzung umfasst,
b) das eine oder die mehreren Steviolglycoside 10 bis 95 Gewichtsprozent Rebaudiosid O umfassen; und
c) die Flüssigkeitszusammensetzung eine wässrige Zusammensetzung ist.

2. Zusammensetzung nach Anspruch 1, wobei die Konzentration des einen oder der mehreren Steviolglycoside in der Zusammensetzung mindestens 5-10 Gewichtsprozent der Zusammensetzung umfasst.

3. Zusammensetzung nach Anspruch 1, wobei die Konzentration des einen oder der mehreren Steviolglycoside 5-6 Gewichtsprozent der Zusammensetzung umfasst.

4. Zusammensetzung nach Anspruch 1, wobei das eine oder die mehreren Steviolglycoside 15-50 Gewichtsprozent Rebaudiosid O umfasst.

5. Zusammensetzung nach Anspruch 1, wobei der pH-Wert der Zusammensetzung kleiner als 5 ist.

6. Zusammensetzung nach Anspruch 1, wobei der pH-Wert der Zusammensetzung von 2 bis 5 reicht.

7. Zusammensetzung nach Anspruch 1, wobei die Zusammensetzung ein Konzentrat umfasst.

8. Zusammensetzung nach Anspruch 1, wobei die Zusammensetzung eine Grundmischung (Throw-Sirup) umfasst.

9. Verfahren zur Erzeugung eines Flüssigkeitskonzentrats, das die Schritte zum Bereitstellen eines oder mehrerer Steviolglycoside, wobei das eine oder die mehreren Steviolglycoside 10-95 Gewichtsprozent Rebaudiosid O umfassen, und Kontaktieren des einen von mehreren Steviolglycosiden mit einer ausreichenden Menge einer Flüssigkeit, die Wasser umfasst, umfasst, um das Flüssigkeitskonzentrat bereitzustellen, wobei die Konzentration des einen oder der mehreren Steviolglycoside mindestens 5 Gewichtsprozent der Zusammensetzung ist.

10. Verfahren nach Anspruch 9, wobei das eine oder die mehreren Steviolglycoside 15-50 Gewichtsprozent Rebaudiosid O umfassen.

11. Verfahren nach Anspruch 9, wobei das Konzentrat ein Getränkekonzentrat umfasst.

12. Verfahren nach Anspruch 9, wobei das Konzentrat eine Grundmischung (Throw-Sirup) umfasst.

## Revendications

1. Composition liquide comprenant un ou plusieurs glycosides de stéviol, dans laquelle :
a. la concentration des un ou plusieurs glycosides de stéviol dans la composition comprend au moins 5 % en poids de la composition,
b. les un ou plusieurs glycosides de stéviol comprennent 10 à 95 % en poids de Rebaudioside O ; et
c. la composition liquide est une composition aqueuse.

2. Composition selon la revendication 1, dans laquelle la concentration des un ou plusieurs glycosides de stéviol dans la composition comprend au moins 5-10 % en poids de la composition.

3. Composition selon la revendication 1, dans laquelle la concentration des un ou plusieurs glycosides de stéviol comprend 5-6 % en poids de la composition.

4. Composition selon la revendication 1, dans laquelle les un ou plusieurs glycosides de stéviol comprennent 15-50 % en poids de Rebaudioside O.

5. Composition selon la revendication 1, dans laquelle le pH de la composition est inférieur à 5.

6. Composition selon la revendication 1, dans laquelle le pH de la composition se situe dans une plage de 2 à 5.

7. Composition selon la revendication 1, dans laquelle la composition comprend un concentré.

8. Composition selon la revendication 1, dans laquelle la composition comprend un sirop à jets.

9. Procédé de fabrication d'un concentré liquide comprenant les étapes consistant à fournir un ou plusieurs glycosides de stéviol, dans lequel les un ou plusieurs glycosides de stéviol comprennent 10-95 % en poids de Rebaudioside O, et à mettre en contact les un ou plusieurs glycosides de stéviol avec une quantité suffisante d'un liquide comprenant de l'eau pour fournir le concentré liquide,
dans lequel la concentration des un ou plusieurs glycosides de stéviol est d'au moins 5 % en poids de la composition.

10. Procédé selon la revendication 9, dans lequel les un ou plusieurs glycosides de stéviol comprennent 15-50 % en poids de Rebaudioside O.

11. Procédé selon la revendication 9, dans lequel le concentré comprend un concentré de boisson.

12. Procédé selon la revendication 9, dans lequel le concentré comprend un sirop à jets.
